# EUROPEAN PATENT APPLICATION

(11) **EP 4 191 941 A1**
(43) Date of publication of application: **07.06.2023**
(21) Application number: 21315267.1
(22) Date of filing: 03.12.2021
(51) Int. Cl.: H04L 9/32, G06F 21/86

(54) **POLICIES FOR HARDWARE CHANGES OR COVER OPENING IN COMPUTING DEVICES**

(71) Applicant: Hewlett-Packard Development Company, L.P., Spring, TX 77389 (US)
(72) Inventor: Jeansonne, Jeffrey Kevin, Spring, 77389 (US); Laing, Thalia May, Spring, 77389 (US); Schiffman, Joshua Serratelli, Spring, 77389 (US); Balacheff, Boris, Spring, 77389 (US); Bramley JR, Richard Alden, Spring, 77389 (US); Baldwin, Adrian John, Spring, 77389 (US)
(74) Representative: HGF

(57) **Abstract**

Instructions may be provided to cause a computing device to receive authorisation data, the authorisation data indicating a policy; output a cryptographic challenge, the cryptographic challenge associated with the computing device and the policy; receive a response to the cryptographic challenge; receive an indication that a hardware change has occurred or a cover of the computing'device has been opened; and in response to a determination, based on the received response, that the cryptographic challenge is passed, react to the indication according to the policy.

## Description

### BACKGROUND

Protecting computing devices, and the data they store, from malicious actors is an ongoing challenge. Scenarios in which an attacker has physical access to internal components of the computing device present particular challenges.

### BRIEF DESCRIPTION OF THE DRAWINGS

Examples are further described hereinafter with reference to the accompanying drawings, in which:
Figure 1a shows an example of a computing device that includes cover detection circuitry.
Figure 1b shows a method for responding to an indication that a cover of a computing device has been opened.
Figure 1c illustrates a machine-readable medium encoded with instructions for performing the method of Figure 1b.
Figure 2a illustrates a method 200 of implementing a policy.
Figure 2b shows a signalling scheme for the method of Figure 2a.
Figure 3a shows another method of implementing a policy.
Figure 3b shows a signalling scheme for the method of Figure 3a.
Figure 4a shows a further method of implementing a policy.
Figure 4b shows a signalling scheme for the method of Figure 4a.
Figure 5a shows a method of updating a log.
Figure 5b shows a signalling scheme for the method of Figure 5a.
Figure 5c illustrates a machine-readable medium encoded with instructions for performing the method of Figure 5a.
Figure 6a shows a method 600 of updating a log.
Figure 6b shows a signalling scheme for the method of Figure 6a.

### DETAILED DESCRIPTION

A computing device may have a cover. The cover may include a case, panel, enclosure, housing, etc. The cover may prevent or obstruct physical access to internal components of the computing device when the cover is closed, e.g. in place. The cover may be opened (e.g. by moving or removing all or part of the cover) to expose the components. Herein open and remove are used interchangeably, and include cases where the cover remains attached to the computing device when opened/removed, and cases where the cover is detached from the computing device when the cover is opened/removed.

If an attacker has access to internal components of the computing device (e.g. by opening the cover) the attacker's opportunities and options for compromising the device or its data may be significantly increased. For example, an attacker with access to internal components of a computing device may perform flash memory replacement attacks or Trusted Platform Module (TPM) probing attacks.

A computing device may include cover detection circuitry to detect opening of a cover of the computing device. The cover detection circuitry may include a switch that is moved between states by opening and closing the cover. The cover may physically move an element of the switch when opened or closed to change a state of the switch. In another example, the cover may include a conductive portion that completes a circuit between two terminals of the switch when the cover is closed. The cover detection circuitry may take other forms.

The computing device may respond to a detection that the cover has been opened by implementing a policy. The policy may include, for example, logging the opening of the cover, deleting information stored by the computing device, triggering an alarm or alert, forcing a shutdown of the system, requiring administrator credentials on the next boot of the device, or any combination of these. The policy to be implemented may be set by an administrator. The policy may be stored by internal storage of the computing device. Logging may include securely storing, in the computing device, a record of events (e.g. events such as opening of the cover). Securely storing information may include storing the information in a manner that resists unauthorised modification, or in a manner that allows unauthorised modification to be detected. Securely storing may include encrypting or signing the information. In some examples, the computing device may be arranged to permit a remote administrator to query or view the log of events, e.g. via a network.

Herein, an administrator may be an entity that manages the device and has administrator rights (e.g. including rights to change hardware and Basic Input Output/System (BIOS) settings). The administrator may administer the computing device remotely (e.g. via a network) or locally. The administrator may be, for example, an IT administrator in a company, or a user of the computing device. Herein, references to operations performed by an administrator may include operations performed by a device of the administrator. In some examples, the administrator may be, or may include, a cloud service that stores permission information to respond automatically, and in accordance with the permissions, to requests from users (e.g. requests for authorisation for particular types of access a computing device).

Logging the opening of the cover may allow an administrator of the computing device to confirm whether any suspicious instances of the cover being opened have occurred. Deleting information stored by the computing device may reduce the risk of unauthorised access to the data, e.g. by an attacker opening the cover. The deleted information may include contents of a TPM or similar element of the device. In some examples, the deleted information may include encryption keys for accessing encrypted data stored by the computing device. For example, data on a hard drive of the computing device may be encrypted, with a key for decryption stored in a TPM of the device. Deletion of the key from the TPM may prevent or hinder access to the data on the hard drive by an attacker. Where the key is backed-up separately, a user or administrator may use the backed-up key to restore access to the data on the hard drive.

An alarm may include an audible or visible indication that the cover has been opened, and may warn an administrator or user of the opening of the cover. In some examples, an alert may be a warning to be displayed to a user or administrator, for example on a subsequent boot or log-in.

In some cases, a cover of the computing device may be opened for legitimate reasons, such as for repair, maintenance or upgrade of the device. In such cases a normal policy for response to opening the cover may be inappropriate. For example, where the cover is opened for a legitimate reason, deleting data stored by the computing device may cause permanent loss of the data, or may create additional work in restoring the data. This might not accord with behaviour an administrator would choose for a particular instance of opening the cover.

To avoid an unwanted performance of a policy when the cover is opened for a legitimate purpose, an administrator may temporarily disable the policy to permit opening of the cover without initiating a response. However, in this case the computing device may be more vulnerable to an attacker during the whole period that the policy is disabled. For example, opening of the cover by an attacker during this period might not be logged, or an attacker may have a greater opportunity to extract data stored on the computing device (e.g. where the normal policy would cause the computer to shut down when the cover is opened). Further, even when the computing device is not accessible to an attacker, the authorised opening of the cover is not logged, such that the log does not represent a complete history of the device. Further, the computing device may be vulnerable for an extended period if there is a delay between disabling the policy and performing the maintenance/repair operation, or a delay between completing the maintenance/repair operation and enabling the policy.

In some cases, operations such as maintenance or repair may be carried out by a delegate. A delegate may be an entity, such as a particular user, a group of users, an engineer, an organization, or the administrator. In some cases, an operation to be performed by a delegate may include opening the cover of the computing device. Herein, some operations described as performed by a delegate may be performed by a device associated with the delegate, such as a computer terminal or mobile computing device.

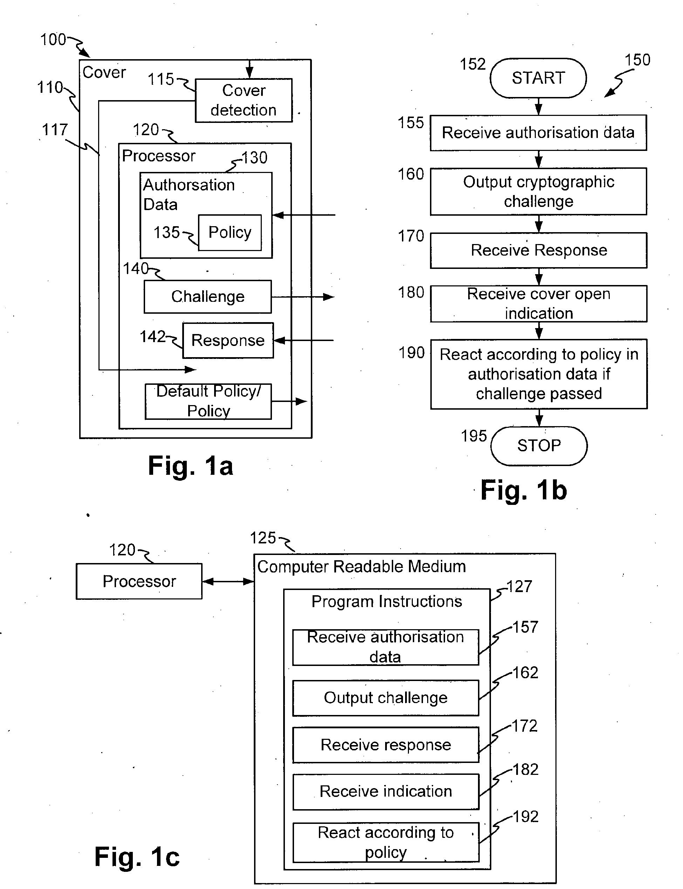

Figure 1a shows an example of a computing device 100. The computing device 100 includes cover detection circuitry 115 to detect removal of a cover 110 of the computing device 100 and provide an indication 117 based on the detection. The cover 110 may cover, enclose, or obstruct access to components of the computing device 100. The computing device 100 includes a processor 120. The processor 120 is arranged to receive authorisation data 130 that describes a policy 135 for removal of the cover 110. The policy 135 may represent, for example, a temporary policy that has been set by an administrator. The policy 135 may describe a response that is to be performed when an authorised user opens the cover 110.

A default policy may be defined for the computing device 100, and may be stored securely by the computing device 100. The default policy may be a policy to be implemented, in the absence of a superseding policy, in response to a detection that the cover 110 has been, or is being, opened.

The processor 120 causes a cryptographic challenge 140 to be output. This challenge 140 may be issued to a user or delegate who is seeking to open the cover 110 in accordance with the policy 135 (i.e. seeking to have the policy 135 apply to the opening of the cover, in place of the default policy). The challenge 140 is associated with the computing device 100 and the policy 135. For example, the challenge 140 may include information associated with the computing device 100 and the policy 135.

The processor 120 is arranged to receive a response 142 to the cryptographic challenge and determine whether the response 142 passes the challenge. The challenge is to test for use of a cryptographic secret. For example, passing the cryptographic challenge may demonstrate possession of, or access to, the cryptographic secret. Possession of, or access to, the cryptographic secret by an entity may be an indication that the entity is authorised to open the cover 110 in accordance with the policy 135 (e.g. instead of according to the default policy).

When the processor 120 receives an indication 117, from the cover detection circuitry 115, that the cover 110 has been opened, the processor 120 implements either the policy 135 in the authorisation data or implements the default policy. The policy 135 in the authorisation data is applied when the response is determined to pass the challenge, and the default policy is applied when the response is determined to fail the challenge. The policy may be implemented by operations within the device 100 or may include transmitting a signal external to the device (e.g. over a network), or both.

This arrangement may allow for an authorised opening of the cover 110 without implementing a policy intended for unauthorised opening of the cover 110. Further, a time window during which the default policy does not apply may be reduced, improving security of the device 100.

The challenge 140 may be output via an output device local to the computing device 100. The response 142 to the challenge 140 may be received via an input device local to the computing device.

The processor 120 may determine that the authorisation data 130 is signed by an administrator, and receive an input, via an input device local to the computing device 100, requesting to remove the cover 110 of the computing device 100. The challenge 140 may be output, in response to the request to remove the cover 110, to an output device local to the computing device 100.

When the delegate is physically present at the computing device 100 (e.g. using an input or output device local to the computing device 100) and begins the operation immediately (or shortly) after passing the challenge, there is a reduced risk of an attacker opening the cover 110 before the delegate, accordingly, this may reduce the risk of the opening by the attacker being interpreted by the computing device 100 as the authorised opening by the delegate.

The computing device 100 may store a public key and determining that the challenge has been passed may include determining that a private key corresponding with the public key has been applied to the output challenge to generate the response 142.

Figure 1b shows a method 150 for responding to an indication that a cover 110 of a computing device 100 has been opened. The method 150 begins at 152. Authorisation data 130 is received 155 by computing device 100. The authorisation data 130 indicates a policy 135. The policy 135 may describe a response to a determination that a cover 110 of the computing device 100 has been opened.

The computing device 100 may output 160 a cryptographic challenge 140, where the cryptographic challenge 140 is associated with the computing device 100 and the policy 135. The cryptographic challenge 140 may include information associated with the computing device 100 and the policy 135. The computing device 100 receives 170 a response 142 to the cryptographic challenge 140.

The computing device 100 receives 180 an indication 117 that a cover 110 of the computing device 100 has been opened. The indication 117 may be provided by a cover detection section, such as cover detection circuitry 115.

If it is determined, based on the received response 142, that the cryptographic challenge is passed, the computing device 100 reacts 190 to the indication in accordance with the policy 135. The method finishes at 195.

Figure 1c illustrates a machine-readable medium 125 encoded with instructions 217 to cause a computing device 100, or a processor 120 of a computing device 100, to perform the method of Figure 1b. The instructions 127 include instructions 157 to receive authorisation data . 130, where the authorisation data 130 indicates a policy 135. The instructions 127 also include instructions 162 to output a cryptographic challenge 140, the cryptographic challenge 140 is associated with the computing device 100 and the policy 135. The cryptographic challenge 140 may include information associated with the computing device 100 and the policy 135. The instructions 127 include instructions 172 to receive a response 142 to the cryptographic challenge 140. The instructions 127 further include instructions 182 to receive an indication 117 that a cover of the computing device 100 has been opened, and instructions 192 to react to the indication 117 according to the policy 135 in response to a determination that the cryptographic challenge is passed. Instructions to determine whether the challenge is passed or failed may be executed in response to receiving the response 142. In some examples, Instructions to determine whether the challenge is passed or failed may be executed in response to the indication 117.

This arrangement may allow for an authorised opening of the cover 110 without implementing a policy (e.g., a default policy) intended for unauthorised opening of the cover 110. Further, a time window during which the default policy does not apply may be reduced, improving security of the device 100.

The instructions 127 may cause the computing device to receive the authorisation data 130 when a delegate is physically present at the computing device 100, the authorisation data 130 being a request from the delegate to open the cover 110 of the computing device 100 according to the policy 135. That is, the request may be a request for the policy 135 to be applied in response to opening of the cover 110. The instructions 127 may further cause the computing device 110 to output the cryptographic challenge 140 in response to receiving the authorisation data 130.

The authorisation data 130 may further indicate the computing device 100, and the instructions 127 may further cause the computing device 100 to authenticate the received authorisation data 130, the authorisation data 130 may indicate an authorisation to open a cover 110 of the computing device 100 according to the policy 135; and receive a request to open the cover 110 of the computing device 100 according to the policy 135 when a delegate is physically present at the computing device 100, wherein the cryptographic challenge 140 is output in response to receiving the request.

The instructions may further cause the computing device 100 to generate the cryptographic challenge 140 using a public key, and determine that the cryptographic challenge 140 has been passed when the received response 142 demonstrates use of a private key associated with the public key.

The cryptographic challenge 140 may be passed when the received response 142 is based on an application of a private key to the output cryptographic challenge.

The policy 135 may include an operation to perform in response to the opening of the cover 110 according to the policy 135. The policy 135 may include bounds on an authorisation for the opening of the cover. The policy 135 may include timing information for applicability of the policy 135. The policy 135 may include a number of times a cover 110 of the computing device 100 may be opened within the policy 135. The policy 135 may include a total time the cover 110 may be opened within the policy 135. The policy 135 may include a setting to force a check of a configuration of the computing device 100 on a next boot of the computing device 100. The policy 135 may include a setting to force shut down the computing device 100 when the cover 110 is opened according to the policy 135. The policy 135 may include an indication that the computing device 100 may remain on when the cover 110 is opened according to the policy 135. The policy 135 may include an indication mandating a prompt for administrator credentials on a next boot, the policy 135 may include instructions for logging when the cover 110 is opened according to the policy 135. The policy 135 may include a combination of the preceding elements.

In response to a determination that the cryptographic challenge is failed, where the determination is based on the received response, the instructions 127 may further cause the computing device 100 to react to the indication 117 according to a default policy. The default policy may include logging the opening of the cover 110, rendering data stored by the computing device 100 unreadable, forcing a shutdown of the computing device 100, mandating a prompt for administrator credentials on a next boot, or a combination. The computing device 100 may respond to an indication 117 according to the default policy when no cryptographic challenge 140 has been issued, such as when the cover 110 is opened without authorisation data 130 having been received, or when the cover 110 is opened without a preceding request to apply a policy 135 other than the default policy.

Herein, examples are described in relation to detecting opening of a cover of a computing device. However, all of the examples herein could similarly be applied to a change of the hardware of the computing device. A change to hardware may include addition, removal, or replacement of hardware elements of the computing device, or any combination of these. Further, a hardware change may include the connection or alteration of hardware components, including changes to jumper settings.

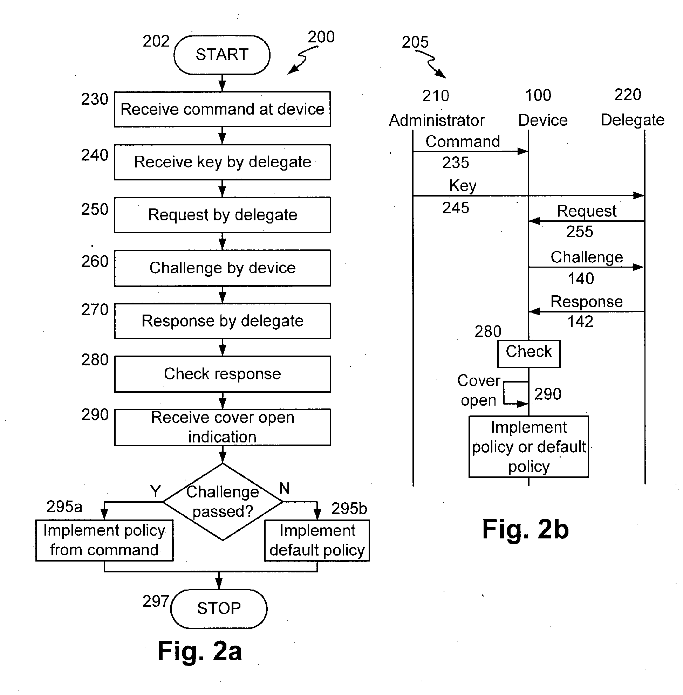

Figure 2a illustrates a method 200 of implementing a policy 135 at a device 100 and Figure 2b shows a corresponding signalling scheme 205. Examples according to Figures 2a and 2b may be consistent with examples according to Figures 1a-c. The method begins at 202. The device 100 receives 230 a command 235 from an administrator 210. The command 235 may be an example of authorisation data 130. The command 235 may be transmitted to the device 100 over a network, such as the Internet.

In some examples, the policy 135 may be implemented at the BIOS level, such that the command 235 is to be communicated to the BIOS. In some examples, the command 235 may be provided to the BIOS via software executing within an Operating System (OS) of the device 100. For example, a System Centre Configuration Manager (SCCM), or similar, may be used. In some examples the command 235 may be sent using a powershell utility.

The device 100 may validate the command 235. This may include validating the authenticity, integrity or both of the command 235. For example, this may include confirming that the command 235 was issued by the administrator 210, confirming that the command 235 has not been modified or tampered with, etc. In some examples, validation of the command 235 may make use of an asymmetric digital signature key pair (*RMpk, RMsk*). The administrator 210 may store a secret key, *RMsk*, and the device 100 may store a corresponding public key, *RMpk.* The command 235 may be signed by the administrator 210 using the secret key, *RMsk*, allowing validation of the command 235 by the device 100 using the public key, *RMpk.* Herein the terms "secret key" and "private key" may be used interchangeably. In some examples, validation of the command 235 may make use of a symmetric shared secret that is shared by the administrator 210 and the device 100.

If the device 100 determines that the command 235 is not validated, the command 235 may be ignored by the device 100. If the device 100 determines that the command 235 is validated, the command 235 (or elements included in the command 235) may be stored in the device 100. The command 235 may be securely stored, e.g. by storing the command in a device or memory region that is resistant to tampering.

The command 235 may include a policy 135 to be implemented in response to opening of the cover 110 when the delegate 220 has been authenticated. The policy 135 may indicate actions to be performed in response to the opening of the cover 110. For example, the policy 135 may indicate that the computing device 100 is to shut down, delete information (such as contents of a TPM), prompt for administrator credentials at next boot, cause a hardware scan to be performed, etc. For example, a hardware scan may be mandated at a set time following the opening of the cover. If the cover is still open or if any unexpected hardware changes are detected, the policy may indicate additional actions to be taken, or may indicate that a default policy for unauthorised access is to be performed (e.g. deleting information stored in a TPM).

The policy 135 may include a constraint on the opening of the cover 110. For example, the policy may indicate a maximum number of cover opening occurrences that are permitted within the policy 135. For example, the policy 135 may permit the cover 110 to be opened up to three times and the policy 135 may expire (i.e. be no longer usable) after the third opening of the cover 100. Another example of a constraint is a maximum time for the cover 110 to be open in accordance with the policy 135. For example, if an upgrade is expected to take less than one hour, the policy 135 may specify that the policy 135 will cease to apply if the cover is opened for more than one hour. Where the policy 135 permits the cover 110 to be opened multiple times, a maximum total time may be defined (i.e. a time for all openings combined), a maximum time for each individual opening event may be defined, or both. Combinations of these constraints may be set in the policy 135. The policy 135 may indicate an expiry for the policy 135. For example, the policy 135 may expire after one week or at a certain time on a certain day. In some cases, the policy 135 may indicate that an operation is to be started by a particular time (e.g. the delegate 220 is to request to open the cover 110 according to the policy 135 and authenticate by a particular date and time, or at least one opening of the cover 110 according to the policy 135 is to be performed by a particular date and time, or all openings of the cover 110 are to be performed by a particular date and time). Any combination of these constraints may be included in the policy 135.

The policy may be intended for a particular device 100 (e.g. a device that is to be repaired or upgraded) and the device 100 may be identified by the policy 135 or the command 235. In some examples the device 100 may be explicitly identified (e.g. by a device identifier included in the command 235). In some examples, the device 100 may be identified indirectly, e.g. by encrypting the command 235 using a public key for which the private key is known by the specific device 100.

The command 235 may include actions that are to be taken after the cover 100 has been opened, e.g. when the cover 110 has been opened and subsequently closed. For example, a scan of hardware of the device 100 may be mandated in the policy 135.

The command 235 may include a unique identifier for the authorisation or policy in the command 235.

The command 235 may include a public key, such as an ephemeral public key *opk.* A corresponding secret key *osk* may be stored by the administrator 210. The keys *opk* and *osk* may form an encryption key pair.

The command 235 may include a signature of the other contents of the command 235 (e.g. contents other than the signature) for use in authenticating the command 235. The signature may use the administrator's secret key *RMsk.*

The command 235 may be stored by the device 100 for use when a delegate 220 requests 250 to open of the cover 110 in accordance with the command 235.

A delegate 220 receives 240 a cryptographic key 245 (e.g. *osk*) from the administrator 210. This may occur before, after, or simultaneously with the provision of the command 235 to the device 100. The key 245 may be sent to the delegate 220 over a secure (e.g. confidential and authenticated) channel.

The key 245 may be accompanied by a unique identifier for the command 235. This may assist the delegate in requesting the correct policy 135, particularly where multiple commands 235 with different policies 135 have been received by the device 100.

The device 100 may receive a request from the delegate 220 to open the cover 100 according to the policy 135. For example, the delegate 220 may enter a command or combination of commands to request that the next cover opening event is handled according to a policy 135 received in a command 235. Where multiple commands 235 have been, or may be, received, the delegate 220 may select the relevant command 235. A unique identifier for the command 235 may be used by the delegate 220. The delegate 220 may, for example, enter the unique identifier by typing, or may select the identifier from a menu listing valid commands 235/policies 135. A command 235 or policy 135 may be valid if it has been validated and has not been used or otherwise expired.

In some examples, the request from the delegate 220 may be received via an input device local to the device 100. This may allow for the policy 135 to be implemented when the delegate 220 is physically present at the device 100. The delegate 220 may be able to perform the operation (such as maintenance, repair, or upgrade) immediately. This may reduce or eliminate a delay between the policy 135 being applied and the operation beginning. This may reduce a period of increased vulnerability associated with implementing a policy 135 that is more permissive than the default policy.

The device 100 issues 260 a cryptographic challenge 140 to the delegate 220. The challenge 140 is associated with the policy 135 and the device 100. For example, the cryptographic challenge 140 may use the ephemeral key *opk*, and the ephemeral key *opk* may be associated with the policy 135 and the device 100 by being included in the command 235, where the command 235 included the policy 135 and was associated with the device 100 (e.g. by explicitly identifying the device 100 or by being signed using a key specifically for use with device 100).

The cryptographic challenge 140 may include a random element, such as a random number. The random element may be encrypted by the device 100 using the ephemeral public key *opk.* The cryptographic challenge 140 may include outputting the encrypted random element as cyphertext to the delegate 220. The challenge 140 may be output in a machine readable form (e.g. as a 2D barcode). In other examples, the challenge may be output from the device 100 to the delegate 220 (or a device of the delegate) via USB, Bluetooth, radio frequency communication (RFC) or other communication channel.

The delegate 220 may receive the cryptographic challenge 140 and determine a response 142 based on the ephemeral secret key *osk* received from the administrator 210. For example, the delegate 220 may have a device (such as a mobile device, e.g. a smartphone) that stores the ephemeral secret key, *osk.* A camera on the delegate's device may be used to capture an image of the challenge 140 (e.g. where the challenge is a 2D barcode). The delegate's device may then use the ephemeral secret key *osk* to decode the challenge and determine a response 142 to the challenge. For example, where the challenge 140 includes an encrypted random element, the challenge 140 may be decrypted to determine the random element, with the random element being the response 142 to the challenge 140. In some examples the response may be derived from the decrypted random element, such as a hash, or portion of a hash, of the random element.

The delegate 220 responds 270 to the challenge 140 by providing the response 142 to the device 100. The response 142 may be received by the device 100 via an input device of the computing device 100. The input device may be local to the computing device 100. The input device may be a keyboard. In some examples, a device of the delegate may send the response 142 to the challenge via a communication channel such as USB, Bluetooth, RFC, etc.

The device 100 determines 280 whether the response 142 is a correct response to the challenge 140. In some examples, the outcome of this determination may be indicated to the delegate 220. In some examples, a result of the determination may be logged.

The device 100 may verify that any bounds or constraints associated with the policy 135 are satisfied.

The delegate 220 may then open the cover 110 and the cover detection circuitry 115 may indicate 290 to the device 100 that the cover 110 has been opened. In some examples a time interval may be defined, such that if the cover 110 is not opened within the time interval following authentication by the delegate 220, the delegate 220 is to reauthenticate before opening the cover 220. For example, the time interval may be five minutes, and so the delegate 220 should open the cover 110 within five minutes of completing the authentication. This may assist in reducing a time during which a more permissive policy applies in place of the default policy. It may also encourage the delegate 220 to begin the operation (e.g. repair, upgrade, etc.) immediately or shortly after authenticating, which may reduce the risk of an attacker gaining physical access to the device 100 while a more permissive policy applies.

If the delegate 220 successfully passed the challenge the device 100 may confirm that the opening of the cover complies with any bounds or constraints associated with the policy 135, and implement 295a the policy received in the command 235.

If it was determined 280 that the challenge was not successfully passed, or if a constraint associated with the policy is violated, a default policy may be implemented 295b.

The method may conclude at 297.

In some examples, where a policy 135 permits the cover 110 to be opened multiple times, the policy 135 may indicate that the delegate 220 is to authenticate each time the cover 110 is to be opened. In other examples, the policy 135 may indicate that the delegate 220 may open the cover 110 multiple times following a single authentication. For example, the policy 135 may indicate that the cover 110 may be opened up to five times in a 24 hour period starting with the first opening of the cover 110. In some examples the policy 135 may define a time period following an authentication by the delegate 220 during which re-authentication of the delegate 220 is not to be requested.

The cryptographic challenge 140 may be any challenge that confirms that the delegate 220 possesses, or is able to use, a cryptographic secret, such as the ephemeral secret key, *osk*. For example, the cryptographic challenge 140 may include the device 100 outputting an unencrypted challenge 140, such as a random number. The delegate 220 may sign the challenge using the ephemeral secret key, *osk*, and return the signed challenge 140 to the device 100 as the challenge response 142. The device 100 may confirm that the ephemeral secret key, *osk*, was used in the signing by using the ephemeral public key, *opk.* The challenge is determined to be passed if the device 100 is able to verify the signature of the signed challenge (response 142). As described above, the challenge 140 and response 142 may be communicated using a display and keyboard, or a communication channel such as USB, Bluetooth, RFC, etc. In some examples a shared secret key may be used, e.g. by the delegate encrypting, decrypting, or applying a Message Authentication Code, using the shared secret and the device decrypting, encrypting or verifying the Message Authentication Code in order to determine whether or not the challenge has been passed.

In some examples, the command 235 may be stored on a storage device, such as a USB drive that can be connected to the device 100 to permit the device 100 to receive the command 235. The administrator 210 may provide the command 235 to the delegate 220 by providing the delegate 220 with the storage device with the command 235 stored on it. In some examples, the administrator 210 may provide the command 235 to the delegate 220 by transmitting the command 235 to the delegate 220 via a network; the delegate 220 may then store the command 235 to a storage device. The delegate 220 may transfer the command 235 from the USB drive (or other storage device) to the device 100. For example, the USB drive may be connected with the device 100 prior to boot, and the command 235 may be obtained by the device 100 from the USB drive during the boot process. The command 235 may be communicated to a Basic Input Output/System BIOS of the device 100. In some examples an entity other than the delegate 220, such as a user who has physical access to the device 100, may use the storage device to provide the command 235 to the computing device 100. The device 100 may validate the command in the same manner as described previously.

The administrator 210 may perform the following operations to provide the command 235 to the device 100. The administrator 210 may generate an ephemeral encryption key pair (*opk, osk*) for use with the command 235. The administrator 210 may also construct the command 235. The command 235 may include a unique identifier to identify the command 235 (or to identify the policy 135 or the authorisation included in the command), the ephemeral public key, *opk*, a policy 135 to be enforced in response to the authorised opening, a signature, or any combination of these. The policy 135 may include any bounds or constraints (such as an open time limit or opening count limit) on the opening of the cover 110. The signature may use a secret key *RMsk*, where the computing device 100 has the corresponding public key *RMpk.* The administrator 210 may then provide the command 235 to the device 100. The command 235 may be provided via a network or via a physical storage device to be connected with the computing device 100. The device 100 may then authenticate the command 235 and store the command 235 in response to a successful authentication. The device 100 may ignore the command 235 if the authentication of the command 235 is unsuccessful.

The administrator 210 may provide the ephemeral secret key, *osk*, to the delegate 220 via a secure channel.

In order to open a cover 110 in accordance with a policy 135, a delegate 220 may provide an input to the device 100 to request opening of the cover 110 in accordance with a received policy 135. The delegate 220 may identify the relevant command 235/authorisation by, for example, typing an identifier associated with the command 235 or selecting the command 235 from a drop-down menu. This may be appropriate when the device 100 has received and stored, or is configured to receive and store, multiple policies for authorised opening of the cover 110.

In response to the request 255 by the delegate 220, the device 100 may generate a random challenge and encrypt the challenge using the ephemeral public key, *opk*, associated with the command/authorisation indicated by the delegate. The encrypted challenge 140 may be output to the delegate 220 as cyphertext. The encrypted challenge 140 may be output as a 2D barcode, for example. The delegate 220 may then receive the encrypted challenge 140 (e.g. using a camera of a device to capture the 2D barcode). The delegate 220 may then use the ephemeral secret key, *osk*, to decrypt the challenge 140. The decrypted challenge may then be provided to the device 100 by the delegate 220 as a response 142 to the challenge 140. The response 142 may be provided to the device 100 by the delegate 220 typing the response 142 using a keyboard, for example. In some examples, the response may be based on the decrypted challenge, e.g. a hash of the decrypted challenge, or a part of the hash, may be used as the response. In some examples, the response may be provided through a communication channel, such as USB, Bluetooth, RFC, etc.

If the device 100 determines that the response 142 matches the original challenge the device 100 may determine that the delegate 220 has been successfully authenticated, the device 100 may log that the delegate has successfully authenticated. The device 100 may verify any bounds or constraints that are defined for the policy 135. The device 100 may provide to the delegate 220 an indication that the delegate 220 is authorised to open the cover 110 in accordance with the selected policy 135.

In response to a detection of the cover 110 being opened, the device 100 may verify any bounds or constraints are still met and, if so, may log the opening of the cover 110 as an authorised opening. The device 100 may respond to the opening in accordance with the selected policy. Any policy settings that are applied due to the authorised opening may also be logged.

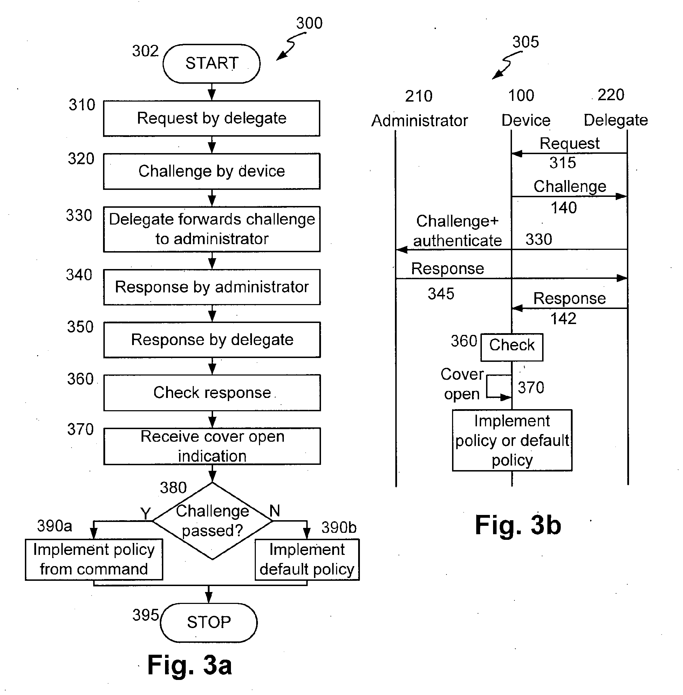

Figure 3a shows a method 300 of implementing a policy 135 at a device 100 and Figure 3b shows a corresponding signalling scheme 305. Examples according to Figures 3a and 3b may be consistent with examples according to Figures 1a-c. According to this method 300, authorised opening of a cover 110 may be carried out in the absence of a previous command 235 from an administrator 210 to the device 100. In some cases, an administrator 210 may be unable to provide a command to the device 100. For example, some methods of providing the command 235 to the device 100 may rely on an operating system being present and executing on the device 100; the absence of an operating system may hinder or prevent provision of a command 235 to the device 100. Method 300 may be used in this situation. Method 300 may also be used when an operating system is present and executing on the device 100.

The method 300 begins at 302. The device 100 receives 310 a request 315 from a delegate. The request 315 may be a request for an authorised opening of the cover 110 and may include authorisation data 130. The authorisation data 130 may indicate a policy 135 that the delegate 220 is requesting to be enforced for an opening of the cover 110. The request 315 may, for example, be entered using a keyboard or transferred via a communication channel (such as USB, Bluetooth, RFC, etc.) The policy 135 may include bounds or constraints to be applied to the authorised opening of the cover 110.

The device 100 may generate and output a cryptographic challenge 140. The challenge 140 may include a random element. The challenge 140 may also include the policy 135 included in the request 315. The challenge 140 may also identify the computing device 100 (e.g. by including a device identifier associated with the device 100). The challenge 140 may be encrypted, e.g. using a public key, *LApk*, where the administrator 210 has the corresponding secret key, *LAsk.* In some examples, the random element of the challenge 140 may be encrypted using the public key, *LApk.* A signature may be applied to the challenge 140, using a secret key in order to prevent modification of elements of the challenge 140.

The encrypted challenge 140 may be output 320 to the delegate 220 as cyphertext. The encrypted challenge 140 may be output, for example, as a 2D barcode.

The delegate 220 may receive the encrypted challenge 140. For example, the delegate 220 may use a camera of a device to capture the encrypted challenge 140 (e.g. as a 2D barcode).

The delegate 220 may communicate 330 the encrypted challenge 140 to the administrator 210. The delegate 220 may also perform an authentication process with the administrator 210 to confirm the delegate's identity to the administrator 210. This process could include the delegate 220 entering a username/password combination, performing a biometric authentication, etc.

The administrator 210 may decide whether to authorise the policy 135 requested by the delegate 220. The administrator 210 may obtain the requested policy 135 from the information included in the challenge 140. The decision may be based on the identity of the delegate 220, the device 100 that is to be opened, or both. This information may be included in the challenge 140 for use by the administrator 210.

If the administrator 210 decides to authorise the requested policy 135, the administrator 210 may decrypt the encrypted challenge 140 using the secret key, *LAsk.*

The administrator 210 may provide 340 the decrypted challenge to the delegate 220 in response 345. The delegate 220 may then provide 350 the response 142 to the device 100. The response 142 may be entered using a keyboard, for example. In some examples, the response 142 may be communicated to the device 100 via a communication channel. In some examples, the response to the challenge may be, for example, a hash of the random element or a portion of the hash of the random element.

The device 100 validates 360 the response 142, e.g. by comparing the response 142 with the original random element of the challenge 140. If the challenge is determined to have been passed, the device 100 may store the policy 135. The device 135 may indicate to the delegate 220 that the authorisation of the policy 135 was successful. In some examples, the device 100 may log the successful authorisation of the policy 135.

When the challenge has been determined 380 to have been passed, the device 100 may detect 370 opening of the cover 110 and may respond 390a in accordance with the policy 135. The device 100 may log the opening of the cover 110 as an authorised opening of the cover 110. When the challenge has been determined 380 to have been failed, the device 100 may detect 370 opening of the cover 110 and may respond 390b in accordance with a default policy. The method ends at 395.

In an example, the challenge 140 may be unencrypted. The device 100 may output 320 a cryptographic challenge 140 that includes an unencrypted random element and an indication of the requested policy 135. The delegate 220 may receive this challenge 140 and provide 330 the challenge 140 to the administrator 220. The administrator 220 may then sign the challenge 140 using the secret key, *LAsk*, and provide 340 the signed challenge 345 to the delegate. The delegate may then provide 350 the signed challenge to the device 100 as a response 142 to the challenge 140. The device 100 may verify the signature using the public key, *LApk*, to validate the response 142 to the challenge 140.

In some examples, the administrator 210 may be a cloud service. The service may store the secret key, *LAsk.* The delegate 220 may authenticate to the administrator 210 and send the challenge 140 to the administrator 210. The service may conditionally decrypt the challenge, dependent on permissions (e.g. defined by a human administrator) that are stored by the service. The permissions stored by the service may be updated or revoked at any time (e.g. by a human administrator).

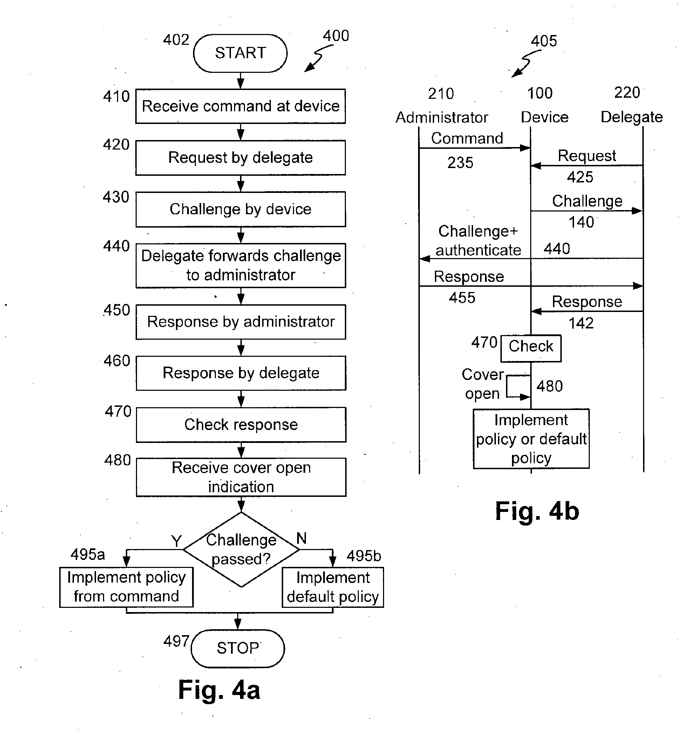

Figure 4a shows a method 400 of implementing a policy 135 at a device 100 and Figure 4b shows a corresponding signalling scheme 405. Examples according to Figures 4a and 4b may be consistent with examples according to Figures 1a-c. The method begins at 402. The device 100 receives 410 a command 235 from the administrator 210. This may be similar to operation 230 of Figure 2a. The device 100 may receive 420 from delegate 220 a request 425 to open the cover 110 in accordance with a policy 135 in the command 235. This may be similar to operation 250 of Figure 2. The device 100 may output 430 a challenge 140. The challenge 140 may include a random element. The challenge 140 may identify the command 235 or policy 135, e.g. by including an identifier of the command 235 or policy 135. The challenge 140 may be encrypted using a public key, such as an ephemeral public key, *opk*, included in the command 235.

The delegate 220 may receive the challenge 140 and send 440 the challenge 140 to the administrator 210. The delegate 220 may also authenticate themselves with the administrator 210. This may be similar to operation 330 of Figures 3a and 3b.

The administrator 210 may decide whether to authorise the delegate 220 to open the cover 110 of the device 100 in accordance with the policy 135. If the delegate 220 is to be authorised, the administrator 210 decrypts the challenge 140, e.g. using an ephemeral secret key, *osk*, and sends 450 the response 455 to the delegate 220. The delegate 220 may then provide 460 the response 142 to the device 100. The device 100 may then confirm 470 whether the response 142 to the challenge 140 is correct, and if so may implement 495a the policy 135 in response to a detection 480 of the cover 110 being opened. Where the response 142 to the challenge 140 is incorrect, the device may implement 495b a default policy. The method ends at 497. This method may be used, for example, when the administrator 210 does not have a suitable channel (e.g. a secure channel) to privately send information to the delegate in advance.

In the example of Figure 4a an ephemeral public key is sent to the device 100 by the administrator 210 in command 235. However, in some examples the ephemeral public key may be omitted. For example, the device 100 may already store a public key (e.g. *LApk*), such as a long term public key, corresponding to a secret key (e.g. *LAsk*) held by the administrator. In this case, the private key may be omitted from the command 235. The previously stored keys (*LApk and LAsk*) may be used in place of the ephemeral keys *opk* and *osk* of Figures 4a and 4b.

According to some examples, a non-transitory machine-readable storage medium is encoded with instructions executable by a processing device, the instructions to cause the processing device to receive a cryptographic challenge, the cryptographic challenge including information associated with a computing device and a policy, the policy describing a response to be taken by the computing device when removal of a cover of the computing device is detected. The instructions also cause the processing device to receive a challenge response based on the cryptographic challenge and a private key, and further cause the processing device to output the challenge response. In some examples the processing device may be a device for use by a delegate for responding to a cryptographic challenge issued by the computing.device.

According to some examples, an administrator 210 can authorise the opening of a device cover 110 by a delegate 220 and set a policy 235 for the opening of the cover 110. The opening may be recorded by the device as authorised, enabling a log to reflect the history of the device more accurately.

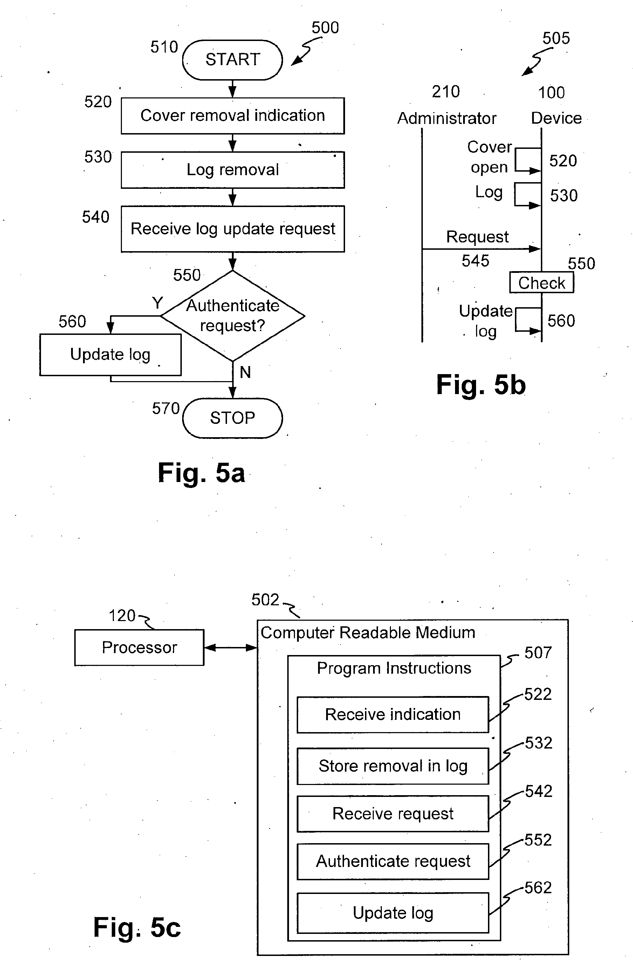

Figure 5a shows a method 500 of updating a log at a device 100 and Figure 5b shows a corresponding signalling scheme 505. The method 500 begins at 510. The device 100 receives 520 an indication that the cover 110 has been removed. The device 100 may store 530, in a log, a record of the removal of the cover 110. The device 100 may receive 540 a request 545 to update the log to indicate that the removal of the cover 110 was authorised. The request 545 may be received from an administrator 210. The request 545 may be a post-removal authorisation command. The request 545 may include a unique identifier to identify the removal that is to be indicated as authorised. The request 545 may include notes (e.g. text) to be included in the log. The notes may, for example, explain the reason for the removal and provide reasoning for authorising the removal. The request 545 may include a signature; for example, the contents of the request (other than the signature) may be signed using a secret key, *RMsk*, held by the administrator 210.

The device 100 may authenticate 550 the request 545. For example, where the request 545 is signed using a secret key, *RMsk*, the device 100 may use a corresponding public key, *RMpk*, to confirm that the request originates from the administrator 210 and has not been altered. The computing device 100 may update 560 the log to indicate that the removal of the cover was authorised, e.g. if the request was successfully authenticated. In some examples updating 560 the log may include re-recording the cover removal, e.g. using the unique identifier associated with the removal, as post-authorised. The method ends at 570

Information may be added to the log to indicate that the unauthorised removal of the cover has been subsequently authorised. In some examples, the original record of the removal is not changed in this process.

In some cases, a non-malicious removal of the cover might not be authorised prior to removal. According to the arrangement of Figures 5a and 5b, the administrator may authorise the removal after the removal has occurred, such that the log better reflects the history of the device 100.

Figure 5c illustrates a machine-readable medium 502 encoded with instructions 507 to cause a computing device 100, or a processor 120 of a computing device 100, to perform the method of Figure 5a.

The instructions 507 include instructions 522 to receive an indication that a cover 110 of the computing device 100 has been removed. Instructions 507 further include instructions 532 to store, in a log, a record of the removal of the cover 110. The instructions 507 include instructions 542 to receive a request 545 to update the log to indicate that the removal of the cover 110 was authorised, and further include instructions 552 to authenticate the request 545. The instructions 507 include instructions 562 to update the log to indicate that the removal of the cover 110 was authorised.

The updating 562 of the log may be performed in response to a successful authentication of the request 545.

The received request 545 to update the log may be cryptographically signed, and authenticating the request may include testing the cryptographic signature.

Receiving 542 the request 545 to update the log may include receiving the request 545 from an input device local to the computing device 100, and authenticating the request 545 may include outputting a cryptographic challenge to an output device local to the computing device 100, receiving a response to the cryptographic challenge and validating the response.

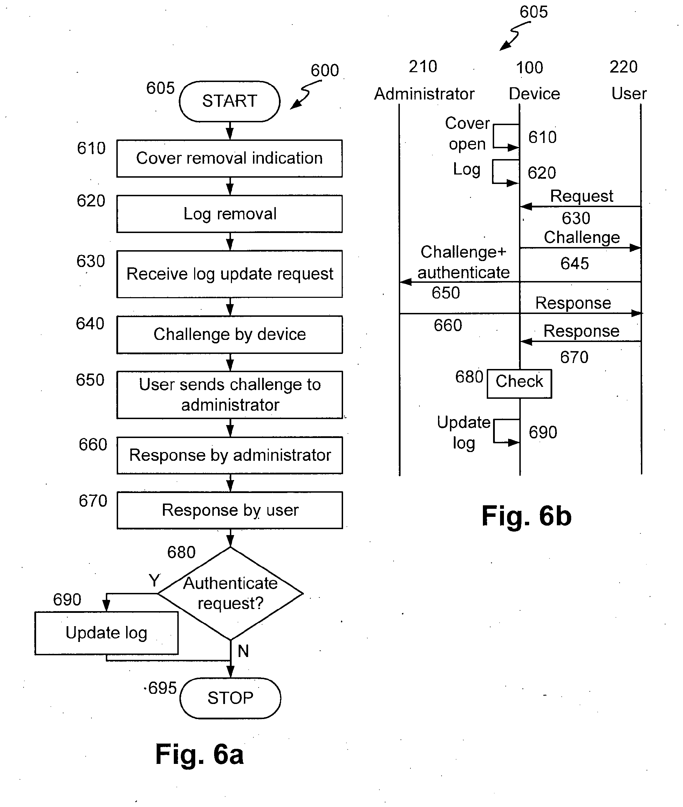

Figure 6a shows a method 600 of updating a log at a device 100 and Figure 6b shows a corresponding signalling scheme 605. The method 600 begins at 605. An unauthorised removal of the cover 110 occurs at 610 and the removal is logged at 620. A policy (e.g. a default policy) may be implemented in response to the detected removal.

A user (e.g. a delegate, administrator, or other user) may provide 630 an input to the device 100 to request post-authorisation of a cover removal. For example the option to request post-authorisation for a cover removal may be provided in a BIOS menu. The user may provide an input to identify the removal that is to be post-authorised (e.g. by typing an identifier of the removal or selecting the removal from a list).

The device 100 may generate a cryptographic challenge 645 and output 640 the challenge 645 to the user 220. The challenge 645 may include a random element and a unique identifier associated with the cover removal. The challenge 645 may include an explanation describing the circumstances of the unauthorised cover removal, e.g. based on text entered by the user 220. In some examples, the device 100 may collect information about the hardware status of the device and this information may be included in the challenge 645.

The challenge 645 is output 640 to the user. The challenge 645 may be a cryptographic challenge. For example the challenge 645 may include an encrypted version of the random element (e.g. using a public key, *LApk*) and the challenge 645 will be passed if the response 670 includes a decrypted version of the random element (e.g. using a corresponding secret key, *LAsk*, held by the administrator 210), or information derived from the decrypted version, such as a hash, or portion of a hash, of the decrypted version. In another example, the challenge 645 may include an unencrypted version of the random element and the challenge will be passed if the response 670 includes a valid signature on the random element (e.g. using a secret key, *LAsk*, held by the administrator 210), where the device 100 stores the corresponding public key, *LApk* which will be used to verify the received signature. In some examples the challenge 645 may be output, via a display device, to the user 220 in the form of a 2D barcode. In some examples the challenge may be output via a communication channel such as USB, Bluetooth, RFC, etc.

The user 220 may send 650 the challenge 645 to the administrator 210. The user 220 may also perform an authentication process to confirm their identity to the administrator 210. The administrator 210 may determine whether to retroactively authorise the removal of the cover 110. Information included in the challenge 645 may assist the administrator 210 in making the decision. For example, an explanation by the user 220 for the removal may provide the administrator 210 with a better understanding of why the removal occurred. Information about the current hardware status of the device 100 may help the administrator 210 to determine whether or not the unauthorised removal resulted in undesired changes to the hardware or state of the device 100, in which case the administrator 210 may decide to reject the request to post-authorise the removal.

If the removal of the cover 110 is to be retroactively approved the administrator 220 may determine the response to the challenge, e.g. using the secret key *LAsk.* The response to the challenge may be provided 660 to the user 220, e.g. via a network.

The user 220 may receive the response and provide 670 it to the device 100, e.g. via a keyboard, or via a communication channel such as USB, Bluetooth, RFC, etc.

The device 100 may validate 680 the response, and if the response is validated (e.g. confirming that the encrypted random element has been correctly decrypted using the secret key *LAsk*) the device 100 may update 690 the log. The log may be updated as described in relation to Figures 5a and 5b, for example. The method may end at 695.

According to some examples, an unauthorised removal of a cover 110 may result in the device 100 requesting administrator credentials before completing a subsequent boot process, e.g. according to a policy for responding to unauthorised cover removal. In this situation, the arrangement of Figures 6a and 6b may allow a user 220 to request retroactive approval of the cover removal. When the removal is approved, the unauthorised cover removal policy may be stopped and the device 100 may complete the boot process.

Operations described herein may be carried out by a computing device. The computing device may execute, e.g. using a processor, instructions stored on a computer-readable storage medium. The computer-readable instructions may be in any suitable form that may be executed by a processor. For example, the code may be implemented in software, firmware, or a combination of these.

A computer-readable storage medium may be any electronic, magnetic, optical, or other physical storage device that contains or stores executable instructions. Computer-readable storage medium may be, for example, Random Access Memory (RAM), an Electrically Erasable Programmable Read-Only Memory (EEPROM), a storage drive, a Compact Disc Read Only Memory (CD-ROM), and the like. As such, the computer-readable storage medium can be non-transitory. The term "non-transitory" does not encompass transitory propagating signals.

A processor may be, or may include, a Central Processing Unit (CPU), Graphics Processing Unit (GPU), Embedded Controller (EC), microprocessor, etc. suitable for retrieval and execution of instructions, electronic circuits configured to perform the operations stored on computer-readable storage media, or a combination thereof. In some examples, the processor may include a plurality of processing elements.

As used herein, a BIOS refers to hardware or hardware and instructions to initialize, control, or operate a computing device prior to execution of an operating system of the computing device. Instructions included within a BIOS may be software, firmware, microcode, or other programming that defines or controls functionality or operation of a BIOS. In one example, a BIOS may be implemented using instructions, such as platform firmware of a computing device, executable by a processor. A BIOS may operate or execute prior to the execution of the OS of a computing device. A BIOS may initialize, control, or operate components such as hardware components of a computing device and may load or boot the OS of computing device.

In some examples, a BIOS may provide or establish an interface between hardware devices or platform firmware of the computing device and an OS of the computing device, via which the OS of the computing device may control or operate hardware devices or platform firmware of the computing device. In some examples, a BIOS may implement the Unified Extensible Firmware Interface (UEFI) specification or another specification or standard for initializing, controlling, or operating a computing device.

Throughout the description and claims of this specification, the words "comprise" and "contain" and variations of them mean "including but not limited to", and they are not intended to (and do not) exclude other components, integers or operations. Throughout the description and claims of this specification, the singular encompasses the plural unless the context implies otherwise. In particular, where the indefinite article is used, the specification is to be understood as contemplating plurality as well as singularity, unless the context implies otherwise.

Features, integers and characteristics described in conjunction with a particular aspect or example are to be understood to be applicable to any other aspect or example described herein unless incompatible therewith. All of the features disclosed in this specification (including any accompanying claims, abstract and drawings), and/or all of the operations of any method or process so disclosed, may be combined in any combination, except combinations where at least some of such features and/or operations are mutually exclusive. Examples are not restricted to the details of any foregoing examples. The Examples may extend to any novel one, or any novel combination, of the features disclosed in this specification (including any accompanying claims, abstract and drawings), or to any novel one, or any novel combination, of the operations of any method or process so disclosed.

The reader's attention is directed to all papers and documents which are filed concurrently with or previous to this specification in connection with this application and which are open to public inspection with this specification, and the contents of all such papers and documents are incorporated herein by reference.

Example implementations can also be realised according to the following numbered examples:
Example 1. A non-transitory machine-readable storage medium encoded with instructions executable by a computing device, the instructions to cause the computing device to: receive authorisation data, the authorisation data indicating a policy; output a cryptographic challenge, the cryptographic challenge associated with the computing device and the policy; receive a response to the cryptographic challenge; receive an indication that a hardware change has occurred or a cover of the computing device has been opened; and in response to a determination, based on the received response, that the cryptographic challenge is passed, react to the indication according to the policy.
Example 2. The non-transitory machine-readable storage medium of example 1, wherein the instructions are to further cause the computing device to: receive the authorisation data when a delegate is physically present at the computing device, the authorisation data being a request from the delegate to change hardware of the computing device or open the cover according to the policy; and output the cryptographic challenge in response to receiving the authorisation data.
Example 3. The non-transitory machine-readable storage medium of example 1, wherein the authorisation data further indicates the computing device, and wherein the instructions are to further cause the computing device to: authenticate the received authorisation data, the authorisation data to indicate an authorisation to change the hardware of the computing device or open the cover according to the policy; and receive a request to change the hardware of the computing device or open the cover according to the policy when a delegate is physically present at the computing device, wherein the cryptographic challenge is output in response to receiving the request.
Example 4. The non-transitory machine-readable storage medium of any of examples 1 to 3, wherein the instructions are to further cause the computing device to: generate the cryptographic challenge using a public key, and determine that the cryptographic challenge has been passed when the received response demonstrates use of a private key associated with the public key.
Example 5. The non-transitory machine-readable storage medium of any of examples 1 to 3, wherein the cryptographic challenge is passed when the received response is based on an application of a private key to the output cryptographic challenge.
Example 6. The non-transitory machine-readable storage medium of any of examples 1 to 5, wherein the policy includes: an operation to perform in response to the hardware change or opening according to the policy, bounds on an authorisation for the hardware change or opening, timing information for applicability of the policy, a number of times a cover of the computing device may be opened within the policy, a total time the cover may be opened within the policy, a setting to force a check of a configuration of the computing device on a next boot of the computing device, a setting to force shut down the computing device when the cover is opened according to the policy, an indication that the computing device may remain on when the cover is opened according to the policy, an indication mandating a prompt for administrator credentials on a next boot, instructions for logging when the cover is opened according to the policy, or a combination.
Example 7. The non-transitory machine-readable storage medium of any of examples 1 to 6, wherein the instructions are to further cause the computing device to: in response to a determination, based on the received response, that the cryptographic challenge is failed, react to the indication according to a default policy, the default policy including logging the hardware change or opening, rendering data stored by the computing device unreadable, forcing a shutdown of the computing device, mandating a prompt for administrator credentials on a next boot, or a combination.
Example 8. The non-transitory machine-readable storage medium of any of examples 1 to 7, wherein the hardware change is replacement of a component of the computing device, addition of a component to the computing device, removal of a component from the computing device, or a combination.
Example 9. A computing device comprising: cover detection circuitry to detect removal of a cover of the computing device and provide an indication based on the detection; and a processor, the processor programmed to: receive authorisation data describing a policy for removal of the cover, output a challenge, the challenge associated with the computing device and the policy, receive a response to the challenge, determine whether the response passes the challenge, receive the indication that the cover has been removed and, when the response was determined to pass the challenge, apply the policy in the authorisation data, or when the response was determined to fail the challenge, implement a default cover policy, wherein the challenge is arranged to test for use of a cryptographic secret.
Example 10. The computing device of example 9, wherein the challenge is output via an output device local to the computing device, the response to the challenge is received via an input device local to the computing device, or both.
Example 11. The computing device of example 9 or example 10, wherein the processor is further programmed to: determine that the authorisation data is signed by an administrator, and receive an input, via an input device local to the computing device, requesting to remove the cover of the computing device, wherein the challenge is output, in response to the request to remove the cover, to an output device local to the computing device.
Example 12. The computing device of any of examples 9 to 11, wherein the computing device stores a public key and determining that the challenge has been passed includes determining that a private key corresponding with the public key has been applied to the output challenge to generate the response.
Example 13. A non-transitory machine-readable storage medium encoded with instructions executable by a computing device, the instructions to cause the computing device to: receive an indication that a cover of the computing device has been removed; store, in a log, a record of the removal of the cover; receive a request to update the log to indicate that the removal of the cover was authorised; authenticate the request; and update the log to indicate that the removal of the cover was authorised.
Example 14. The non-transitory machine-readable storage medium of example 13, wherein: the received request to update the log is cryptographically signed, and authenticating the request includes testing the cryptographic signing.
Example 15. The non-transitory machine-readable storage medium of example 13 or example 14, wherein: receiving the request to update the log includes receiving the request from an input device local to the computing device, and authenticating the request includes outputting a cryptographic challenge to an output device local to the computing device, receiving a response to the cryptographic challenge and validating the response.
Example 16. A non-transitory machine-readable storage medium encoded with instructions executable by a computing device, the instructions to cause the computing device to: receive a cryptographic challenge, the cryptographic challenge including information associated with a computing device and a policy, the policy describing a response to be taken by the computing device when removal of a cover of the computing device is detected; receiving a challenge response based on the cryptographic challenge and a private key; and outputting the challenge response.

## Claims

1. A non-transitory machine-readable storage medium encoded with instructions executable by a computing device, the instructions to cause the computing device to:
receive authorisation data, the authorisation data indicating a policy;
output a cryptographic challenge, the cryptographic challenge associated with the computing device and the policy;
receive a response to the cryptographic challenge;
receive an indication that a hardware change has occurred or a cover of the computing device has been opened; and
in response to a determination, based on the received response, that the cryptographic challenge is passed, react to the indication according to the policy.

2. The non-transitory machine-readable storage medium of claim 1, wherein the instructions are to further cause the computing device to:
receive the authorisation data when a delegate is physically present at the computing device, the authorisation data being a request from the delegate to change hardware of the computing device or open the cover according to the policy; and
output the cryptographic challenge in response to receiving the authorisation data.

3. The non-transitory machine-readable storage medium of claim 1, wherein the authorisation data further indicates the computing device, and
wherein the instructions are to further cause the computing device to:
authenticate the received authorisation data, the authorisation data to indicate an authorisation to change the hardware of the computing device or open the cover according to the policy; and
receive a request to change the hardware of the computing device or open the cover according to the policy when a delegate is physically present at the computing device, wherein
the cryptographic challenge is output in response to receiving the request.

4. The non-transitory machine-readable storage medium of claim 1, wherein the instructions are to further cause the computing device to:
generate the cryptographic challenge using a public key, and
determine that the cryptographic challenge has been passed when the received response demonstrates use of a private key associated with the public key.

5. The non-transitory machine-readable storage medium of claim 1, wherein the cryptographic challenge is passed when the received response is based on an application of a private key to the output cryptographic challenge.

6. The non-transitory machine-readable storage medium of claim 1, wherein the policy includes: an operation to perform in response to the hardware change or opening according to the policy, bounds on an authorisation for the hardware change or opening, timing information for applicability of the policy, a number of times a cover of the computing device may be opened within the policy, a total time the cover may be opened within the policy, a setting to force a check of a configuration of the computing device on a next boot of the computing device, a setting to force shut down the computing device when the cover is opened according to the policy, an indication that the computing device may remain on when the cover is opened according to the policy, an indication mandating a prompt for administrator credentials on a next boot, instructions for logging when the cover is opened according to the policy, or a combination.

7. The non-transitory machine-readable storage medium of claim 1, wherein the instructions are to further cause the computing device to:
in response to a determination, based on the received response, that the cryptographic challenge is failed, react to the indication according to a default policy, the default policy including logging the hardware change or opening, rendering data stored by the computing device unreadable, forcing a shutdown of the computing device, mandating a prompt for administrator credentials on a next boot, or a combination.

8. The non-transitory machine-readable storage medium of claim 1, wherein the hardware change is replacement of a component of the computing device, addition of a component to the computing device, removal of a component from the computing device, or a combination.

9. A computing device comprising:
cover detection circuitry to detect removal of a cover of the computing device and provide an indication based on the detection; and
a processor, the processor programmed to:
receive authorisation data describing a policy for removal of the cover,
output a challenge, the challenge associated with the computing device and the policy,
receive a response to the challenge,
determine whether the response passes the challenge,
receive the indication that the cover has been removed and,
when the response was determined to pass the challenge, apply the policy in the authorisation data, or
when the response was determined to fail the challenge, implement a default cover policy,
wherein the challenge is arranged to test for use of a cryptographic secret.

10. The computing device of claim 9, wherein the challenge is output via an output device local to the computing device, the response to the challenge is received via an input device local to the computing device, or both.

11. The computing device of claim 9, wherein the processor is further programmed to:
determine that the authorisation data is signed by an administrator, and
receive an input, via an input device local to the computing device, requesting to remove the cover of the computing device, wherein
the challenge is output, in response to the request to remove the cover, to an output device local to the computing device.

12. The computing device of claim 9, wherein the computing device stores a public key and determining that the challenge has been passed includes determining that a private key corresponding with the public key has been applied to the output challenge to generate the response.

13. A non-transitory machine-readable storage medium encoded with instructions executable by a computing device, the instructions to cause the computing device to:
receive an indication that a cover of the computing device has been removed;
store, in a log, a record of the removal of the cover;
receive a request to update the log to indicate that the removal of the cover was authorised;
authenticate the request; and
update the log to indicate that the removal of the cover was authorised.

14. The non-transitory machine-readable storage medium of claim 13, wherein:
the received request to update the log is cryptographically signed, and
authenticating the request includes testing the cryptographic signing.

15. The non-transitory machine-readable storage medium of claim 13, wherein:
receiving the request to update the log includes receiving the request from an input device local to the computing device, and
authenticating the request includes outputting a cryptographic challenge to an output device local to the computing device, receiving a response to the cryptographic challenge and validating the response.
